# EUROPÄISCHE PATENTSCHRIFT

(11) **EP 3 450 141 B1**
(45) Veröffentlichungstag und Bekanntmachung des Hinweises auf die Patenterteilung: **05.05.2021**
(21) Anmeldenummer: 18190988.8
(22) Anmeldetag: 27.08.2018
(51) Int. Cl.: B29C 65/56, B29C 65/18, B29L 31/30

(54) **VERFAHREN UND SYSTEM ZUM VERBINDEN ZWEIER FLUGZEUGBAUTEILE AUS EINEM THERMOPLASTISCHEN VERBUNDWERKSTOFF**
METHOD AND SYSTEM FOR CONNECTING TWO AIRCRAFT COMPONENTS MADE OF A THERMOPLASTIC COMPOSITE MATERIAL
PROCÉDÉ ET SYSTÈME DE RACCORDEMENT DES DEUX PARTIES D'AVIONS D'UN MATÉRIAU COMPOSITE THERMOPLASTIQUE

(30) Priorität: 29.08.2017 DE 102017119856
(43) Veröffentlichungstag der Anmeldung: 06.03.2019
(73) Patentinhaber: Airbus Operations GmbH, 21129 Hamburg (DE)
(72) Erfinder: Linde, Peter, 21129 Hamburg (DE); Heltsch, Norbert, 21129 Hamburg (DE)

(56) Entgegenhaltungen:
- DE-A1-102004 038 084
- DE-A1-102015 106 563

## Beschreibung

Die vorliegende Erfindung betrifft ein Verfahren zum Verbinden zweier Flugzeugbauteile aus einem thermoplastischen Verbundwerkstoff mittels eines Niets sowie ein System zur Durchführung eines entsprechenden Verfahrens.

Bei der Entwicklung zukünftiger Flugzeugmodelle wird die Verwendung neuartiger Werkstoffe, wie beispielsweise thermoplastischer Verbundwerkstoffe, in Erwägung gezogen. Thermoplastische Verbundwerkstoffe zeichnen sich unter anderem durch ein geringes Gewicht bei hoher Belastbarkeit aus. Zudem können Flugzeugbauteile aus thermoplastischen Verbundwerkstoffen, und insbesondere aus thermoplastischen Faserverbundwerkstoffen, auch mittels Schweißverbindungen verbunden werden, was den Herstellungsaufwand gegenüber klassischen Nietverbindungen verringert. Dennoch ist es nicht möglich und auch nicht gewollt, auf die bewährten Nietverbindungen vollständig zu verzichten. Dabei können die Nietverbindungen alleine oder auch gemeinsam mit Schweißverbindungen Verwendung finden. Letzteres hat insbesondere den Vorteil, dass die Niete die Ausbreitung von Rissen in der Schweißverbindung stoppen. Zudem haben Nietverbindungen gegenüber Schweißverbindungen den Vorteil, dass ihr Zustand bei der Wartung optisch von außen überprüft werden kann, also keine aufwendigen technischen Untersuchungen notwendig sind.

DE 10 2004 038 084 A1 offenbart ein Verfahren zum Verbinden zweier flächiger Strukturen aus faser- oder textilverstärkten Thermoplasten mit einem Niet aus einem faserverstärkten Thermoplast. Hierzu werden die beiden flächigen Strukturen flächig aneinander angeordnet und mit einem erwärmten Dornwerkzeug ein Loch in eine erwärmte Fügezone der flächigen Strukturen eingebracht. Dabei wird das Loch in den flächigen Strukturen alleine von dem Dornwerkzeug gebildet. In dieses Loch wird in direkter Verlängerung des Dornwerkzeugs umgehend der Niet eingesetzt. Aufgrund der Temperatur der Fügezone und des Dornwerkzeugs plastifiziert der Niet und verbindet sich mit den flächigen Strukturen, so dass neben dem für Niete typischen Formschluss auch ein Stoffschluss entsteht. Außerdem werden die beiden Enden des Niets plastisch zu Schließköpfen umgeformt.

DE 10 2015 106563 A1 offenbart ein ähnliches Verfahren.

Ausgehend vom Stand der Technik ist es eine Aufgabe der vorliegenden Erfindung, ein verbessertes Verfahren und ein verbessertes System zum Verbinden von flächigen Strukturen aus thermoplastischen Verbundwerkstoffen bereitzustellen, die die besonderen Anforderungen der Luftfahrt und Schwierigkeiten bei der Verarbeitung von thermoplastischen Verbundwerkstoffen berücksichtigten.

Die der vorliegenden Erfindung zu Grunde liegende Aufgabe wird durch ein Verfahren gemäß Anspruch 1 sowie eine Verwendung eines Systems gemäß Anspruch 8 gelöst.

Gemäß einem ersten Aspekt der vorliegenden Erfindung ist ein Verfahren zum Verbinden zweier Flugzeugbauteile aus einem thermoplastischen Verbundwerkstoff mittels eines Niets vorgesehen. Das Verfahren umfasst die folgenden Schritte: Bereitstellen eines ersten Flugzeugbauteils aus einem thermoplastischen Verbundwerkstoff und eines zweiten Flugzeugbauteils aus einem thermoplastischen Verbundwerkstoff, Anordnen des ersten Flugzeugbauteils und des zweiten Flugzeugbauteils so zueinander, dass das erste Flugzeugbauteil zumindest abschnittsweise flächig am zweiten Flugzeugbauteil anliegt, Aufweiten einer ersten Bohrung im ersten Flugzeugbauteil und einer zweiten Bohrung im zweiten Flugzeugbauteil mit einem Dornelement, so dass die erste Bohrung und die zweite Bohrung nach dem Aufweiten eine durchgängige Bohrung durch das erste und das zweite Bauteil zur Aufnahme des Niets bilden, wobei das erste Bauteil und das zweite Bauteil beim Aufweiten lokal erwärmt werden, so dass das erste Bauteil beim Aufweiten der ersten Bohrung und das zweite Bauteil beim Aufweiten der zweiten Bohrung thermoplastisch umgeformt werden, wobei das Dornenelement durch die erste Bohrung hindurch in die zweite Bohrung eingeführt wird, und Einbringen des Niets in die durchgängige Bohrung, so dass sich das Niet durch die erste Bohrung im ersten Flugzeugbauteil und die zweite Bohrung im zweiten Flugzeugbauteil erstreckt.

Mit anderen Worten werden erfindungsgemäß zwei Flugzeugbauteile mit einem Niet verbunden. Der Niet ist vorzugsweise aus Titan oder einem anderen, in der Luftfahrt zugelassenen Metall gefertigt. Beide Flugzeugteile sind erfindungsgemäß aus einem thermoplastischen Verbundwerkstoff gebildet, wobei es sich vorzugsweise um einen Faserverbundwerkstoff handelt. Unter einem thermoplastischen Material wird vorliegend ein Material verstanden, dass bei gängigen Umgebungstemperaturen fest ist und sich oberhalb einer bestimmten Temperatur plastisch verformen lässt. Die materialabhängige Temperatur, oberhalb derer sich das thermoplastische Material für die vorliegende Anwendung hinreichend plastisch verformen lässt, ist die Schmelztemperatur. Vorzugsweise wird das thermoplastische Material über die Schmelztemperatur bis zu einer Prozesstemperatur erwärmt. Eine Umformung eines thermoplastischen Materials, das auf eine Temperatur oberhalb seiner Schmelztemperatur erwärmt worden ist, wird nachfolgend als thermoplastische Umformung bezeichnet. Kühlt das thermoplastische Material wieder auf eine Temperatur unterhalb der Schmelztemperatur ab, verfestigt sich das thermoplastische Material wieder und lässt sich nicht mehr plastisch umformen. Beispielsweise kann als thermoplastischer Verbundwerkstoff aus Polyetheretherketon (PEEK) verwendet werden, der mit Endlosfasern aus Kohlenstoff verstärkt ist. Die Schmelztemperatur eines solchen Verbundwerkstoffs liegt beispielsweise bei 380 °C und die Prozesstemperatur bei 400 °C. Bei den beiden Bauteilen kann es sich beispielsweise um zwei Schalen eines Flugzeugrumpfes handeln, die entlang einer Längsnaht verbunden werden, oder um ein Rumpfsegment und einen Querträger, der mit dem Rumpfsegment verbunden werden soll.

Die beiden Flugzeugbauteile werden zunächst so aneinander angeordnet, dass sie zumindest in einigen Bereichen flächig aneinander anliegen. Beispielsweise können die Flugzeugbauteile in einem Überlappstoß angeordnet werden. Denkbar ist auch, dass zumindest eines der beiden Flugzeugbauteile teilweise die Form eines profilierten Balkens hat, wie beispielsweise ein Fußbodenquerträger für eine Passagierebene eines Passagierflugzeugs. Das erfindungsgemäße Verfahren kann auch zur Verbindung einer Stringerkupplung mit zwei zu verbindenden Stringern an einem Rumpfquerstoß verwendet werden..

Nachdem die beiden Flugzeugbauteile, die auch kurz als Bauteile bezeichnet werden, aneinander angeordnet worden sind, werden eine erste Bohrung im ersten Flugzeugbauteil und eine zweite Bohrung im zweiten Flugzeugbauteil mit einem Dornelement ausgeweitet. Die erste und die zweite Bohrung haben dabei vor dem Aufweiten einen Innendurchmesser, der kleiner ist als der Außendurchmesser des Niets, der in die Bohrungen eingesetzt werden soll. Hierzu wird das Dornelement und vorzugsweise auch in einem begrenzten Bereich um die erste und die zweite Bohrung die beiden Flugzeugbauteile erwärmt. Das Dornelement wird sodann durch eine Öffnung in einer freien Oberfläche des ersten Bauteils zunächst in die erste Bohrung des ersten Flugzeugbauteils eingeführt und durch diese hindurchgeschoben. Aufgrund der Abmessung des Dornelements weitet dieses die erste Bohrung auf einen weiteren Durchmesser auf, als den ursprünglichen Durchmesser der Bohrung. Die Temperatur des Dornelements wird dabei so gewählt, dass die Umformung des ersten Bauteils thermoplastisch erfolgt, wobei im Rahmen der vorliegenden Erfindung auch denkbar ist, dass das erste Flugzeugbauteil im Bereich der ersten Bohrung durch zusätzliche Heizelemente erwärmt wird, damit es zuverlässig oberhalb seiner Schmelztemperatur ist, wenn die erste Bohrung mit dem Dornelement aufgeweitet wird und dabei thermoplastisch umgeformt wird. Das Dornelement wird weiter durch die zweite Bohrung hindurchgeschoben, bis es durch eine Öffnung in einer freien Oberfläche des zweiten Bauteils wieder aus dem zweiten Bauteil austritt. Auch die Bohrung im zweiten Flugzeugbauteil wird durch das Dornelement aufgeweitet und dabei thermoplastisch umgeformt. Die erste und die zweite Bohrung werden damit durch das Dornelement zu einer durchgängigen Bohrung aufgeweitet, die sich durch das erste und das zweite Flugzeugbauteil erstreckt und einen durchgängigen, einheitlichen Innendurchmesser aufweist, der ausreichend groß ist, damit die durchgängige Bohrung den Niet aufnehmen kann.

Abschließend wird in die durchgängige Bohrung der Niet eingebracht und beispielsweise auf herkömmliche Weise geschlossen. Der Niet erstreckt sich somit durch die erste Bohrung im ersten Flugzeugbauteil und die zweite Bohrung im zweiten Flugzeugbauteil.

Das erfindungsgemäße Verfahren hat den Vorteil, dass die beiden Flugzeugbauteile bereits Bohrungen mit einem ersten Durchmesser aufweisen, die dann mit dem Dornelement aufgeweitet und vereinheitlicht werden. Der erste Durchmesser ist kleiner als der Außendurchmesser des Niets, der in die Bohrungen eingesetzt werden soll. Daher können größere Bohrungen in kürzerer Zeit in die Flugzeugbauteile eingebracht werden, als dies im Stand der Technik möglich war. Zudem ist aufgrund der bereits eingebrachten Bohrungen der von dem Dornelement zu verdrängende Anteil von Verbundmaterial deutlich geringer und daher die Wahrscheinlichkeit höher, dass die Fasern des Verbundwerkstoff beim Aufweiten der Bohrung nicht überstreckt werden, sondern lediglich durch das Dornelement seitlich bzw. parallel zur Bohrung verdrängt werden. Daher ermöglicht es die vorliegende Erfindung, eine robustere Verbindung zwischen den beiden Flugzeugbauteilen herzustellen.

In einer bevorzugten Ausführungsform wird die erste Bohrung in das erste Flugzeugbauteil eingebracht, bevor das erste und das zweite Flugzeugbauteil so angeordnet werden, dass das erste Flugzeugbauteil und das zweite Flugzeugbauteil abschnittsweise flächig aneinander anliegen. Dies ist besonders bevorzugt, wenn die erste Bohrung mit einem mechanischen Bohrwerkzeug in das erste Flugzeugbauteil eingebracht wird. Es ist weiter bevorzugt, wenn die zweite Bohrung in das zweite Flugzeugbauteil eingebracht, bevor das erste und das zweite Flugzeugbauteil so angeordnet werden, dass das erste Flugzeugbauteil und das zweite Flugzeugbauteil abschnittsweise flächig aneinander anliegen. Dies ist besonders bevorzugt, wenn die zweite Bohrung mit einem mechanischen Bohrwerkzeug in das zweite Flugzeugbauteil eingebracht wird.

In der bevorzugten Ausführungsform werden das erste und/oder das zweite Flugzeugbauteil bereits mit einer Bohrung versehen, bevor das erste Flugzeugbauteil an dem zweiten Flugzeugbauteil angeordnet wird. Dies kann insbesondere an einem anderen Ort geschehen, so dass beim Einbringen der Bohrung entstehender Schmutz, wie beispielsweise Bohrspäne, entfernt werden kann und sich nicht auf anderen Abschnitten des Flugzeugbauteils ablagert. Letzteres ist insbesondere dann vorteilhaft, wenn vormontierte Flugzeugkomponenten mit Nieten verbunden werden sollen, in denen beispielsweise elektrische Komponenten bereits vorinstalliert sind. Werden in einem solchen Fall die Bohrungen erst in die Flugzeugbauteile eingebracht, nachdem diese aneinander angeordnet worden sind, so müssen die bereits montierten Flugzeugkomponenten aufwendig geschützt werden, um Verschmutzungen der Flugzeugkomponenten zu vermeiden. Erfindungsgemäß ist es jedoch möglich, diese Bohrungen bereits in die Flugzeugbauteile einzubringen, bevor weitere Komponenten installiert werden.

Besonders vorteilhaft ist dabei auch, dass durch das Aufweiten der Bohrungen mit dem Dornelement Abweichungen bei der relativen Platzierung der ersten und der zweiten Bohrung zueinander durch das Dornwerkzeug kompensiert werden. So können beispielsweise in das erste und das zweite Bauteil eine Vielzahl von Bohrungen eingebracht werden, bevor die beiden Bauteile aneinander angeordnet werden. Die Position der beiden Bauteile zueinander wird dann zunächst durch einen einzelnen Niet festgelegt, der in eine erste und eine zweite Bohrung eingebracht wird, die zueinander fluchtend angeordnet sind. Abweichungen in der Positionierung der weiteren ersten und zweiten Bohrungen aufgrund von Fertigungstoleranzen werden dann auf besonders vorteilhafte Weise kompensiert, wenn die Bohrungen durch das Dornelement aufgeweitet werden. Die Bohrungen werden demnach nicht notwendiger Weise in alle Richtungen gleichmäßig aufgeweitet.

In einer alternativen, bevorzugten Ausführungsform wird die Bohrung in das erste und/oder zweite Flugzeugbauteil mit einem Laser eingebracht, das Material des entsprechenden Flugzeugbauteils also verdampft und nicht mechanisch abgetragen wird. Dies hat den Vorteil, dass beim Verdampfen des Materials der Flugzeugbauteile kein Bohrstaub entsteht, der die Flugzeugbauteile verschmutzt. Bei Verwendung eines Lasers ist es somit möglich, die Bohrungen in zumindest einem der beiden Flugzeugbauteile auch einzubringen, wenn bereits schmutzempfindliche Komponenten auf dem Flugzeugbauteil installiert worden sind.

Es ist weiter bevorzugt, wenn mit dem Dornelement eine die erste Bohrung abschnittsweise umgebene Vertiefung zur Aufnahme eines Nietkopfes des Niets in eine freie Oberfläche des ersten Flugzeugbauteils eingebracht wird, in dem das erste Flugzeugbauteil thermoplastisch umgeformt wird, wobei das Dornelement von der freien Oberfläche aus in die erste Bohrung eingebracht wird. Die Vertiefung zur Aufnahme des Nietkopfes ist besonders bevorzugt kegelförmig. Durch das Einbringen einer Vertiefung bzw. Senkung in die freie Oberfläche des ersten Flugzeugbauteils, also der Oberfläche, die von der Oberfläche wegweist, mit der das erste Flugzeugbauteil an dem zweiten Flugzeugbauteil anliegt, wird auf besonders vorteilhaft in einem Arbeitsschritt bereits mit einer Aufnahme für den Kopf des Niets versehen, so dass der eingebrachte Niet mit der ersten Oberfläche vorzugsweise bündig abschließt. Dies reduziert den Arbeitsaufwand und verhindert zudem Staubbildung gegenüber einem Verfahren, bei dem die Senkung mechanisch, d.h., konventionell spanabhebend bzw. subtraktiv, in das erste Bauteil eingebracht wird.

Es ist weiter bevorzugt, wenn nach dem Aufweiten der ersten und der zweiten Bohrung mit dem Dornelement ein Schulterelement verwendet wird, um an einer freien Oberfläche des zweiten Flugzeugbauteils, an der das Dornelement aus der zweiten Bohrung austritt, nachdem das Dornelement durch die erste und die zweite Bohrung geführt worden ist, von dem Dornelement verdrängtes thermoplastisches Material derart thermoplastisch umzuformen, dass eine Anlagefläche für einen Schließkopf des Niets gebildet wird. Die Anlagefläche ist vorzugsweise eben und erstreckt sich senkrecht zur Erstreckungsrichtung der ersten und der zweiten Bohrung. In der bevorzugten Ausführungsform wird auf besonders vorteilhafte Weise das von dem Dornelement beim Aufweiten der Bohrungen verdrängte Material thermoplastisch umgeformt, um eine Anlagefläche für den Schließkopf des Niets zu bilden, mit dem das Niet auf der von dem Kopf des Niets gegenüberliegenden Seite verschlossen wird. Das Schulterelement wird vorzugsweise erst verwendet, nachdem die Bohrungen aufgeweitet worden sind, damit das überschüssige Material des ersten und des zweiten Flugzeugbauteils beim Aufweiten der Bohrungen ungehindert ausweichen kann und nicht jenseits der plastischen Umformung beschädigt wird.

Besonders bevorzugt ist es, wenn das erste Flugzeugbauteil und das zweite Flugzeugbauteil miteinander verschweißt werden, bevor die erste Bohrung und die zweite Bohrung mit dem Dornelement aufgeweitet werden und nachdem das erste und das zweite Flugzeugbauteil so angeordnet werden, dass das erste Flugzeugbauteil und das zweite Flugzeugbauteil zumindest abschnittsweise flächig aneinander anliegen. Durch die Kombination von Schweißverbindung und Nietverbindung kann eine besonders robuste Verbindung erreicht werden, die zudem aufgrund der Verbindung durch die Niete unempfindlicher gegenüber Rissbildungen ist. Zudem hat dies den Vorteil, dass bestehende Risse durch die kraftschlüssige Verbindung des Niets wirksam in ihrer Ausbreitung gehindert werden.

In einem zweiten Aspekt wird die Aufgabe durch eine Verwendung eines Systems zur Ausführung eines Verfahrens nach einem der vorgehenden Ausführungsformen gelöst. Das System umfasst ein oberes Klemmelement, ein unteres Klemmelemente und das Dornelement. Das System ist dazu eingerichtet, das Dornelement zu erwärmen. Das obere Klemmelement weist eine Anlagefläche zur Anlage an der freien Oberfläche des ersten Flugzeugbauteils auf, und das untere Klemmelement eine Anlagefläche zur Anlage an der freien Oberfläche des zweiten Flugzeugbauteils. Das obere Klemmelement weist zudem eine Führung auf, in der das Dornelement geführt wird, wenn mit dem Dornelement die erste und die zweite Bohrung aufgeweitet werden. Die Vorteile des Systems entsprechen den Vorteilen des Verfahrens, das mit dem System durchgeführt wird.

In einer bevorzugten Ausführungsform umfasst das obere Klemmelement Heizelemente, mit denen das erste Flugzeugbauelement erwärmt werden kann. Es ist weiter bevorzugt, wenn das untere Klemmelement Heizelemente umfasst, mit denen das zweite Flugzeugbauelement erwärmt werden kann. Auf diese Weise kann sichergestellt werden, dass die Flugzeugbauelemente im Bereich der Bohrungen auf Temperaturen oberhalb ihrer jeweiligen Schmelztemperatur erwärmt worden sind, wenn sie mit dem Dornelement aufgeweitet werden. So wird ein besonders schonendes Aufweiten der Bohrungen ermöglicht.

Es ist weiter bevorzugt, wenn das Dornelement entlang einer Längsachse einen ersten Abschnitt, einen zweiten Abschnitt und einen dritten Abschnitt aufweist. Das Dornelement bildet im ersten Abschnitt eine Kegelspitze, die zum Aufweiten der ersten und der zweiten Bohrung ausgebildet ist. Der zweite Abschnitt schließt sich an den ersten Abschnitt an. Das Dornelement ist im zweiten Abschnitt zylinderförmig ausgebildet. Der dritte Abschnitt schließt sich an den zweiten Abschnitt an. Das Dornelement bildet im dritten Abschnitt einen Kegelstumpf, wobei ein Durchmesser des von dem Dornelement gebildeten Kegelstumpfes entlang der Längsachse vom zweiten Abschnitt weg zunimmt und der dritte Abschnitt zum Ausbilden der Vertiefung zur Aufnahme des Nietkopfes des Niets ausgebildet ist. Dies System hat den Vorteil, dass mit dem Dornelement nicht nur die Bohrungen aufgeweitet werden können, sondern auch direkt eine Senkung oder Vertiefung zur Aufnahme des Nietkopfes des Niets gebildet werden kann.

Schließlich ist es bevorzugt, wenn das untere Klemmelement ein Schulterelement aufweist, um an der freien Oberfläche des zweiten Flugzeugbauteils, an der das Dornelement aus der zweiten Bohrung austritt, von dem Dornelement verdrängtes thermoplastisches Material derart thermoplastisch umzuformen, dass eine Anlagefläche für den Schließkopf des Niets gebildet wird. Dies hat den Vorteil, dass aus dem überschüssigen Material eine Anlagefläche für den Schließkopf gebildet werden kann und so ein flächiger Lastübergang zwischen dem Nietkopf und dem zweiten Flugzeugbauteil gewährleistet ist.

Nachfolgend wird die vorliegende Erfindung anhand der Zeichnungen näher beschrieben, die eine Ausführungsform des erfindungsgemäßen Verfahrens zeigen, bei dem unter Verwendung eines Ausführungsbeispiels eines Systems zwei Flugzeugbauteile aus einem thermoplastischen Verbundwerkstoff mit einem Niet verbunden werden, wobei
- Figur 1a: einen ersten Schritt eines Ausführungsbeispiels eines erfindungsgemäßen Verfahrens zeigt,
- Figur 1b: den abgeschlossen ersten Schritt eines Ausführungsbeispiels eines erfindungsgemäßen Verfahrens zeigt,
- Figur 2: einen zweiten Schritt des Ausführungsbeispiels eines erfindungsgemäßen Verfahrens und eine erste Schnittansicht eines Ausführungsbeispiels eines zur Durchführung des Verfahrens verwendeten Systems zeigt,
- Figur 3: einen dritten Schritt des Ausführungsbeispiels eines erfindungsgemäßen Verfahrens und einer zweite Schnittansicht des Ausführungsbeispiels eines zur Durchführung des Verfahrens verwendeten Systems zeigt,
- Figur 4: einen vierten Schritt des Ausführungsbeispiels eines erfindungsgemäßen Verfahrens und eine dritte Schnittansicht des Ausführungsbeispiels eines zur Durchführung des Verfahrens verwendeten Systems zeigt,
- Figur 5: einen fünften Schritt des Ausführungsbeispiels eines erfindungsgemäßen Verfahrens zeigt,
- Figur 6: einen sechsten Schritt des Ausführungsbeispiels eines erfindungsgemäßen Verfahrens zeigt und
- Figur 7: ein schematisches Beispiel zeigt, wie mit dem erfindungsgemäßen Verfahren Fertigungstoleranzen kompensiert werden können.

In der nachfolgenden Figurenbeschreibung werden in den Figuren gleichlautende Elemente mit den gleichen Bezugszeichen bezeichnet.

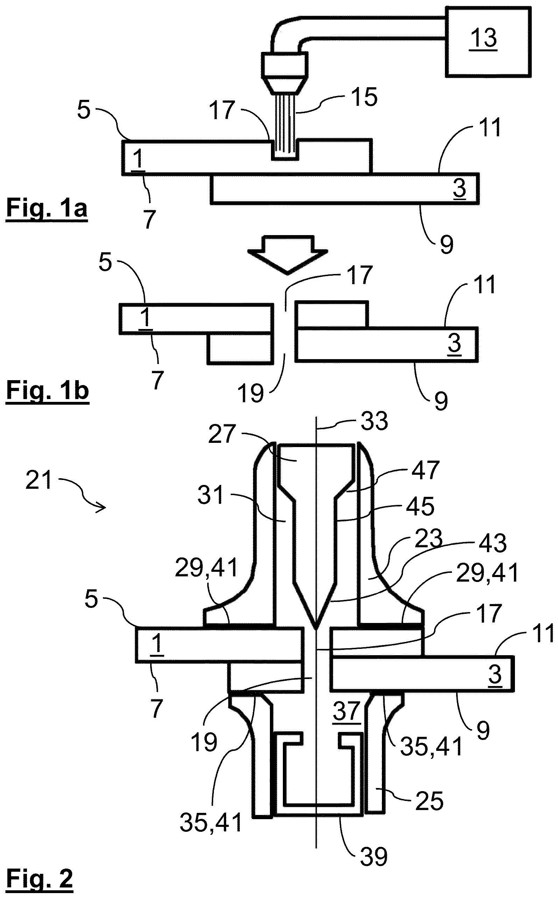

In Figur 1a sind ein erstes und ein zweites Flugzeugbauteil 1, 3 dargestellt. Die Flugzeugbauteile 1, 3 sind in einem Überlappstoß angeordnet, so dass das erste Flugzeugbauteil 1 abschnittsweise flächig an dem zweiten Flugzeugbauteil 3 anliegt. Das erste Flugzeugbauteil 1 weist eine freie Fläche 5 auf, die einer Fläche 7 gegenüberliegt, mit der das erste Flugzeugbauteil 1 abschnittsweise an dem zweiten Flugzeugbauteil 3 anliegt. Entsprechend weist auch das zweite Flugzeugbauteil 3 eine freie Fläche 9 auf, die einer Fläche 11 gegenüberliegt, mit der das zweite Flugzeugbauteil 3 an dem ersten Flugzeugbauteil 1 anliegt. Das erste und das zweite Flugzeugbauteil 1, 3 liegen folglich mit ihren jeweiligen den freien Flächen 5, 9 gegenüberliegenden Flächen 7, 11 aneinander an.

Das erste und das zweite Flugzeugbauteil 1, 3 sind aus einem thermoplastischen Faserverbundwerkstoff gebildet. Beispielswiese kann es sich um ein mit Endloskohlefasern verstärktes PEEK-Material handeln, bei dem die Schmelztemperatur beispielsweise bei 380 °C und die Prozesstemperatur bei 400 °C liegt.

In dem Ausführungsbeispiel in Figur 1a ist zudem eine Laserquelle 13 dargestellt, die einen Laserstrahl 15 emittiert, mit dem eine erste Bohrung 17 in das erste Flugzeugbauteil 1 und eine zweite Bohrung 19 in das zweite Flugzeugbauteil 3 eingebracht werden. Die in Figur 1a dargestellte Verwendung eines Lasers zum Einbringen der Bohrungen 17, 19 in die beiden Bauteile 1, 3 hat den Vorteil, dass kein Bohrstaub entsteht, der bereits mit einem der beiden Flugzeugbauteilen 1, 3 verbundene Komponenten verschmutzen könnte. In Figur 1a ist lediglich die erste Bohrung 17 teilweise dargestellt, soweit sie bereits in das erste Flugzeugbauteil 1 eingebracht worden ist. Die zweite Bohrung 19 im zweiten Flugzeugbauteil 3 ist in Figur 1a nicht dargestellt.

Figur 1b zeigt die beiden Flugzeugbauteile 1, 3 in die nun die erste Bohrung 17 und die zweite Bohrung 19 vollständig mit dem Laser eingebracht worden sind. In Figur 1b sind die erste und die zweite Bohrung 17, 19 fluchtend dargestellt, d.h., die beiden Bohrungen sind entlang einer Achse angeordnet und weisen senkrecht zu der Achse die gleichen Abmessungen auf. Dies ist jedoch keine Voraussetzung für die Anwendung des Ausführungsbeispiels der vorliegenden Erfindung. Ganz im Gegenteil kann das Ausführungsbeispiel besonders vorteilhaft angewendet werden, wenn die erste und die zweite Bohrung 17, 19 in die beiden Flugzeugbauteile 1, 3 eingebracht worden sind, bevor die beiden Flugzeugbauteile 1, 3 aneinander angeordnet worden sind. Da in diesem Fall, insbesondere wenn beide Bauteile 1, 3 mehrere erste und zweite Bohrungen 17, 19 aufweisen, aufgrund von Fertigungstoleranzen die erste und die zweite Bohrung 17, 19 oftmals nicht fluchtend zueinander ausgerichtet werden können, kann das Ausführungsbeispiel eines erfindungsgemäßen Verfahrens dazu verwendet werden, die Fertigungstoleranzen auf vorteilhafte Weise zu kompensieren.

In einem nachfolgenden Schritt wird zunächst ein System 21 an den beiden Flugzeugbauteilen 1, 3 angeordnet. Das System 21, das in Figur 2 wie auch in allen übrigen Figuren in einer Schnittansicht dargestellt ist, umfasst ein oberes Klemmelement 23 und ein unteres Klemmelement 25 sowie ein Dornelement 27. Das obere Klemmelement 23 umfasst eine Anlagefläche 29, die an der freien Oberfläche 5 des ersten Flugzeugbauteils 1 anliegt. Das obere Klemmelement 23 umfasst weiterhin eine Führung 31, hier in Form einer zylindrischen Bohrung 31, in der das Dornelement 27 geführt wird. In dem in den Figuren dargestellten Ausführungsbeispiel ist das obere Klemmelement 23 rotationssymmetrisch um eine Längsachse 33 des Dornelements 27 aufgebaut.

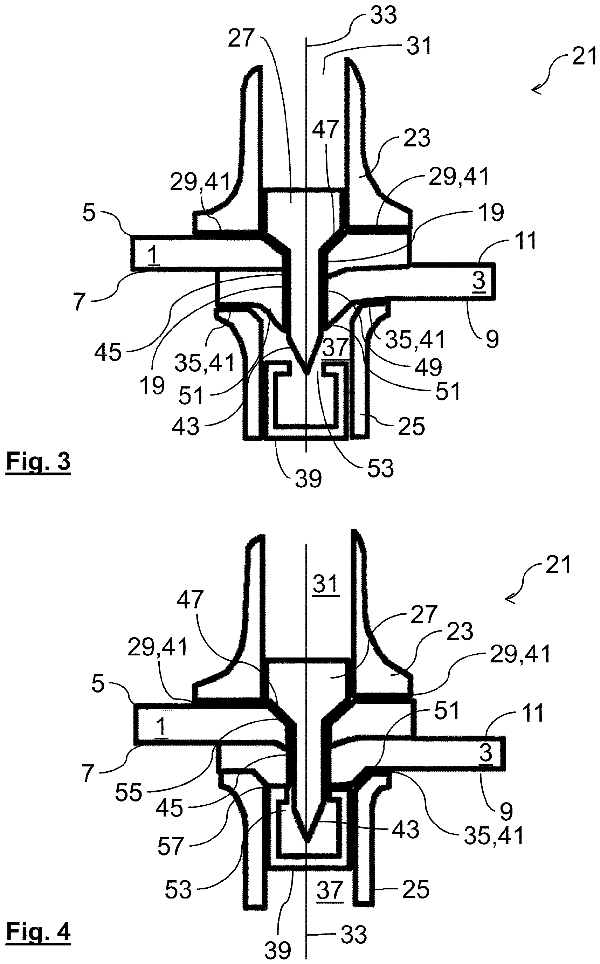

Das untere Klemmelement 25 liegt mit einer Anlagefläche 35 an der freien Oberfläche 9 des zweiten Flugzeugbauteils 3 an. In einer Bohrung 37 des unteren Klemmelement 25 ist ein Schulterelement 39 angeordnet, dessen Funktion bezugnehmend auf Figur 4 nachfolgend noch näher erläutert wird. Die Bohrung 37 sowie der übrige Teil des zweiten Elements 25 ist ebenfalls Rotation symmetrisch um die Längsachse 33 des Dornelements 27 aufgebaut.

Im oberen und im unteren Klemmelement 23, 25 sind zudem Heizelemente 41 angeordnet, die in die Anlageflächen 29, 35 integriert sind. Mit diesen Heizelementen 41 werden in dem in Figur 2 dargestellten Arbeitsschritt die Bereiche der beiden Flugzeugbauteile 1, 3, die die erste und die zweite Bohrung 17, 19 umgeben, auf eine Temperatur erwärmt, die oberhalb ihrer jeweiligen Schmelztemperatur liegt.

Das Dornelement 27 weist drei Abschnitte auf: einen ersten Abschnitt 43 einen zweiten Abschnitt 45 und einen dritten Abschnitt 47. Im ersten Abschnitt 43 ist das Dornelement 27 kegelförmig, was sich an dem im Wesentlichen dreieckigen Querschnitt zeigt, der in der Schnittansicht des Dornelements in den Figuren 2 bis 4 gezeigt ist. Der kegelförmig erste Abschnitt 43 des Dornelements 27 ist zum Aufweiten der ersten und zweiten Bohrung 17, 19 vorgesehen. Der zweite Abschnitt 45 schließt sich direkt an den ersten Abschnitt 43 an. Im zweiten Abschnitt 45 weist das Dornelement 27 eine zylindrische Form auf. Daher entspricht der Querschnitt des Dornelements 27 im zweiten Abschnitt 45 einem Rechteck. Der zweite Abschnitt 45 des Dornelements 27 ist dazu vorgesehen, einen Bereich einer durchgängigen Bohrung durch die beiden Flugzeugbauteile 1, 3 zu formen, der einen gleichbleibenden Durchmesser aufweist und in dem ein Schaft des Niets aufgenommen wird. Der zweite Abschnitt 45 des Dornelements 27 geht direkt in den dritten Abschnitt 47 über. Dieser hat die Form eines Kegelstumpfes, was sich in dem im Wesentlichen trapezförmigen Querschnitt widerspiegelt. Die Funktion des dritten Abschnitts 47 des Dornelements 27 wird nachfolgend bezugnehmend auf Figur 3 näher erläutert werden.

Nicht dargestellt in den Figuren ist eine Heizvorrichtung, mit der das Dornelement 27 auf eine Temperatur erwärmt werden kann, durch die eine plastische Verformung der Flugzeugbauelemente 1, 3 gewährleistet ist. Diese Heizvorrichtung kann beispielsweise im Dornelement 27 selbst angeordnet sein. Es ist aber auch denkbar, dass Dornelement 27 indirekt durch eine Heizvorrichtung zu erwärmen, die in dem oberen Klemmelement 23 angeordnet ist.

Figur 3 zeigt das Ergebnis des nachfolgenden Verfahrensschritts, bei dem das Dornelement 27 in Richtung seiner Längsachse 33 auf das untere Klemmelement 25 zu durch die Bohrungen 17, 19 hindurch verschoben worden ist. Da der Durchmesser des Dornelements 27 im zweiten Bereich 45 größer ist als der Durchmesser der ersten und zweiten Bohrung 17, 19, sind die Bohrungen 17, 19 durch den Kontakt mit dem kegelförmig den ersten Abschnitt 43 des Dornelements 27 zu einer einheitlichen Bohrung 49 aufgeweitet worden, deren Innendurchmesser dem Außendurchmesser des Dornelements 27 im zweiten Abschnitt 45 entspricht. Da die Flugzeugbauteile 1, 3 im Bereich um die Bohrungen 17, 19 vor dem Einbringen des Dornelements 27 auf eine Temperatur erwärmt worden sind, die oberhalb ihrer jeweiligen Schmelztemperatur liegt, sind die beiden Flugzeugbauteile 1, 3 beim Aufweiten thermoplastisch umgeformt werden. Dies hat den Vorteil, dass die Fasern des Faserverbundwerkstoffs beim Aufweiten nicht reißen, sondern lediglich durch das Dornelement 27 verdrängt werden. In dem in Figur 3 gezeigten Ausführungsbeispiel zeigt sich dies insbesondere durch das Überschussmaterial 51, dass an der freien Oberfläche 9 des zweiten Bauteils 3 einen Wulst um die durchgängige Bohrung 49 bildet.

Wie man bereits in Figur 3 erkennen kann, weist das Schulterelement 39 eine mittige Öffnung 53 auf, in die das Dornelement 27 aufgenommen werden kann, wenn es durch die Flugzeugbauelemente 1, 3 hindurchgeschoben worden ist.

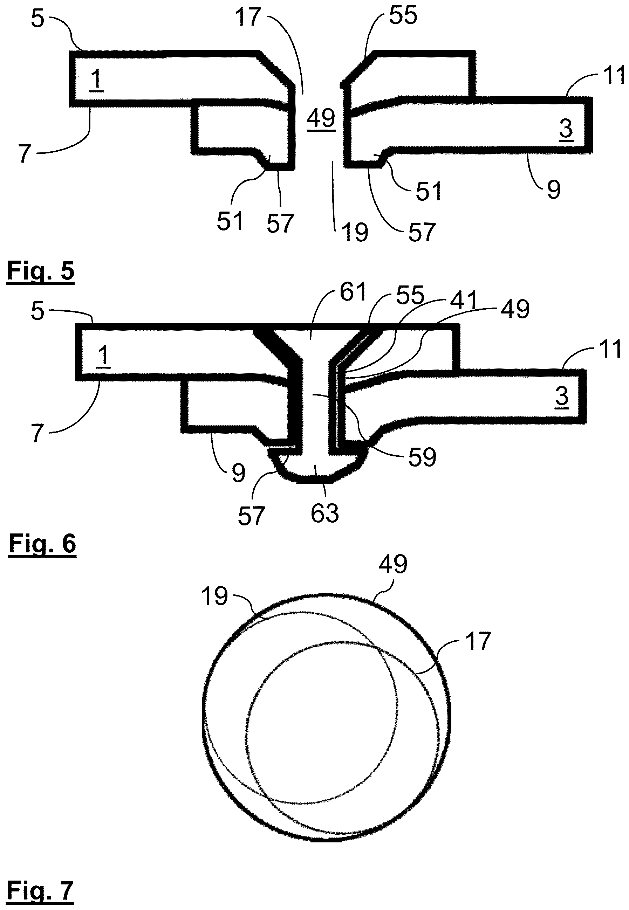

Gut zu erkennen ist in Figur 3, wie der dritte Abschnitt 47 des Dornelements 27 beim Eindringen in das erste Flugzeugbauteil 1 eine Vertiefung oder Senkung 55 ausgebildet hat, die zur Aufnahme eines Schließkopfes eines Niets vorgesehen ist, wie bezugnehmend auf die Figuren 5 und 6 noch näher dargestellt. Aufgrund der Form des dritten Abschnitts 47 des Dornelements 27 hat die Senkung 55 die Form eines Kegelstumpfes.

Im nachfolgenden Verfahrensschritt, dessen Ergebnis in Figur 4 dargestellt wird, ist das Schulterelement 39 entlang der Längsachse 33 des Dornelements 27 in der Bohrung 37 des zweiten Klemmelements 25 auf die freie Oberfläche 9 des zweiten Flugzeugbauelements 3 zubewegt worden. Dabei ist sie mit dem Überschussmaterial 51 in Kontakt gekommen und hat eine Anlagefläche 57 für einen Schließkopf eines Niets geformt. Die Anlagefläche 57 ist vorzugsweise eben und erstreckt sich in einer Ebene, die senkrecht zur Längsachse 33 des Dornelements 27 verläuft. Die Längsachse 33 des Dornelements 27 fällt mit der Erstreckungsrichtung 33 der ersten und der zweiten Bohrung 17, 19 zusammen. Wie man in Figur 4 deutlich erkennen kann, ist der gesamte aus dem zweiten Flugzeugbauelemente 3 herausragende Teil des Dornelements 27 in dem Schulterelement 39 aufgenommen worden.

Figur 5 zeigt die beiden Flugzeugebauelemente 1, 3, nachdem das System 21 wieder entfernt worden ist. Wie man insbesondere im Vergleich zu Figur 1b gut erkennen kann, sind die erste und die zweite Bohrung 17, 19 zu einer einheitlichen, durchgängigen Bohrung 49 aufgeweitet worden. Neben der durchgängigen Bohrung 49 ist mit dem Dornelement 27 zudem eine Vertiefung 55 in das erste Flugzeugbauelement 1 eingebracht worden, die zur Aufnahme eines Nietkopfes vorgesehen ist. Da die Vertiefung 55 auf vorteilhafte Weise auch durch eine thermoplastische Umformung der beiden Flugzeugbauelemente 1, 3 gebildet worden ist, konnte die Vertiefung 55 ohne Bohrstaub oder anderen Schmutz in das Flugzeugelement 1 eingebracht werden.

Ebenfalls gut zu erkennen ist in Figur 5, wie aus dem Überschussmaterial 51, das von dem Dornelement 27 beim Aufweiten der Bohrungen 17, 19 verdrängt worden ist, mittels des Schulterelements 39 eine ebene Anlagefläche 57 für einen Schließkopf eines Niets gebildet worden ist. Auch die Anlagefläche 57 ist auf vorteilhafte Weise durch thermoplastische Umformung des Überschussmaterials 51 gebildet worden, so dass es auch bei der Bildung der Anlagefläche 57 nicht zu Abrieb und der damit verbundenen Staubbildung kommt, durch die die Flugzeugbauteile 1, 3 oder mit diesen verbundene Komponenten verschmutzt werden.

In Figur 6 ist schließlich ein Niet 59 aus Titan oder einer Titanlegierung dargestellt, der in die durchgängige Bohrung 41 eingebracht worden ist. Der Niet 59 umfasst einen Nietkopf 61 und einen Schließkopf 63, die auf bekannte Weise gebildet werden. Wie man in Figur 6 unmittelbar erkennen kann, wird der Nietkopf 61 in der Vertiefung 55 vollständig aufgenommen, so dass der Nietkopf 61 bündig mit der freien Oberfläche 5 des ersten Flugzeugbauelements 1 abschließt. Da die Vertiefung 55 zur Aufnahme des Nietkopfes 61 ausgestaltet ist, wird hier zudem eine besonders gleichmäßige Kraftübertragung zwischen Niet 59 und erstem Flugzeugbauelement 1 gewährleistet. Entsprechend ist in Figur 6 auch zu erkennen, dass der Schließkopf 63 flächig an der für diesen vorgesehenen Anlagefläche 57 anliegt. Auch hier wird durch die eigens ausgebildete Form auf vorteilhafte Weise für einen gleichmäßigen Kraftübertrag zwischen Niet 59 und zweitem Flugzeugbauteil 3 gesorgt.

Schließlich ist in Figur 7 schematisch dargestellt, wie mit dem erfindungsgemäßen Verfahren bzw. unter Verwendung eines Systems 21 Fertigungstoleranzen kompensiert werden können, wenn die erste und die zweite Bohrung 17, 19 in die jeweiligen Flugzeugbauteile 1, 3 eingebracht werden, bevor die Flugzeugbauteile 1, 3 aneinander angeordnet werden. In Figur 7 sind die erste und die zweite Bohrung 17, 19 in Draufsicht dargestellt, wobei lediglich der Außenumfang der jeweiligen Bohrung 17, 19 angedeutet ist. Da die beiden Bohrungen 17, 19 nicht fluchtend angeordnet sind, ist es nicht möglich, ein Niet in diese einzusetzen. Erfindungsgemäß ist nun vorgesehen, dass die erste Bohrung 17 und die zweite Bohrung 19 mit einem Durchmesser eingebracht werden, der kleiner ist als der Außendurchmesser des Niets 59. Die beiden Bohrungen 17, 19 werden erst nachdem die beiden Flugzeugbauteile 1, 3 aneinander angeordnet worden sind, mit dem Dornelement 27 auf den endgültigen Durchmesser der durchgängigen Bohrung 49 aufgeweitet. Da die Bohrungen aufgrund der thermoplastische Umformung nicht in alle Richtungen gleichmäßig aufgewertet werden müssen, können beim Einbringen des Dornelements Fertigungstoleranzen kompensiert und eine einheitliche Bohrung 49 zur Aufnahme des Niets 59 bereitgestellt werden. Dabei wird auf vorteilhafte Weise beim Aufweiten kein Bohrstaub erzeugt und damit einhergehende Verschmutzungen vermieden. Zudem werden auch keine Fasern im Faserverbundwerkstoff zerstört, was die Festigkeit der Flugzeugbauteile 1, 3 und ihrer Verbindung erhöht.

## Patentansprüche

1. Verfahren zum Verbinden zweier Flugzeugbauteile (1, 3) aus einem thermoplastischen Verbundwerkstoff mittels eines Niets (59), wobei das Verfahren die folgenden Schritte aufweist:
Bereitstellen eines ersten Flugzeugbauteils (1) aus einem thermoplastischen Verbundwerkstoff und eines zweiten Flugzeugbauteiles (3) aus einem thermoplastischen Verbundwerkstoff,
Anordnen des ersten Flugzeugbauteils (1) und des zweiten Flugzeugbauteils (3) so zueinander, dass das erste Flugzeugbauteil (1) zumindest abschnittsweise flächig an dem zweiten Flugzeugbauteil (3) anliegt,
Aufweiten einer ersten Bohrung (17) im ersten Flugzeugbauteil (1) und einer zweiten Bohrung (19) im zweiten Flugzeugbauteil (3) mit einem Dornelement (27), so dass die erste Bohrung (17) und die zweite Bohrung (19) nach dem Aufweiten die durchgängige Bohrung (49) durch das erste und das zweite Flugzeugbauteil (1, 3) zur Aufnahme des Niets (59) bilden, wobei das erste Flugzeugbauteil (1) und das zweite Flugzeugbauteil (3) beim Aufweiten lokal erwärmt werden, so dass das erste Flugzeugbauteil (1) beim Aufweiten der ersten Bohrung (17) und das zweite Flugzeugbauteil (3) beim Aufweiten der zweiten Bohrung (19) thermoplastisch umgeformt werden, wobei das Dornelement (27) durch die erste Bohrung (17) hindurch in die zweite Bohrung (19) eingeführt wird, und
Einbringen des Niets (59) derart in die durchgängige Bohrung (49), dass sich das Niet (59) durch die erste Bohrung (17) im ersten Flugzeugbauteil (1) und die zweite Bohrung (19) im zweiten Flugzeugbauteil (3) erstreckt.

2. Verfahren nach Anspruch 1, wobei die erste Bohrung (17) in das erste Flugzeugbauteil (1) eingebracht wird, bevor das erste und das zweite Flugzeugbauteil (1, 3) so angeordnet werden, dass das erste Flugzeugbauteil (1) und das zweite Flugzeugbauteil (3) zumindest abschnittsweise flächig aneinander anliegen,
wobei die erste Bohrung (17) vorzugsweise mit einem spanabhebenden Bohrwerkzeug in das erste Flugzeugbauteil (1) eingebracht wird.

3. Verfahren nach Anspruch 1 oder 2, wobei die zweite Bohrung (19) in das zweite Flugzeugbauteil (3) eingebracht wird, bevor das erste und das zweite Flugzeugbauteil (1, 3) so angeordnet werden, dass das erste Flugzeugbauteil (1) und das zweite Flugzeugbauteil (3) zumindest abschnittsweise flächig aneinander anliegen,
wobei die zweite Bohrung (19) vorzugsweise mit einem spanabhebenden Bohrwerkzeug in das zweite Flugzeugbauteil (3) eingebracht wird.

4. Verfahren nach einem der vorhergehenden Ansprüche, wobei die erste Bohrung (17) mit einem Laser in das erste Flugzeugbauteil (1) eingebracht wird, und/oder
wobei die zweite Bohrung (19) mit einem Laser in das zweite Flugzeugbauteil (3) eingebracht wird.

5. Verfahren nach einem der vorhergehenden Ansprüche, wobei mit dem Dornelement (27) eine die erste Bohrung (17) abschnittsweise umgebene Vertiefung (55) zur Aufnahme eines Nietkopfes (61) des Niets (59) in eine freie Oberfläche (5) des ersten Flugzeugbauteils (1) eingebracht wird, in dem das erste Flugzeugbauteil (1) thermoplastisch umgeformt wird, wobei das Dornelement (27) von der freien Oberfläche (1) aus in die erste Bohrung (17) eingebracht wird,
wobei die Vertiefung (55) zur Aufnahme des Nietkopfes (61) vorzugweise kegelförmig ist.

6. Verfahren nach einem der vorhergehenden Ansprüche, wobei nach dem Aufweiten der ersten und der zweiten Bohrung (17, 19) mit dem Dornelement (27) ein Schulterelement (39) verwendet wird, um an einer freien Oberfläche (9) des zweiten Flugzeugbauteils (3), an der das Dornelement (27) aus der zweiten Bohrung (19) austritt, nachdem das Dornelement (27) durch die erste und die zweite Bohrung (17, 19) geführt worden ist, von dem Dornelement (27) verdrängtes thermoplastisches Material derart thermoplastisch umzuformen, dass eine Anlagefläche (57) für einen Schließkopf (63) des Niets (59) gebildet wird,
wobei die Anlagefläche (57) vorzugsweise eben ist und sich senkrecht zu einer Erstreckungsrichtung (33) der ersten und der zweiten Bohrung (17, 19) erstreckt.

7. Verfahren nach einem der vorhergehenden Ansprüche, wobei das erste Flugzeugbauteil (1) und das zweite Flugzeugbauteil (3) miteinander verschweißt werden, bevor die erste Bohrung (17) und die zweite Bohrung (19) mit dem Dornelement (27) aufgeweitet werden und nachdem das erste und das zweite Flugzeugbauteil (1, 3) so angeordnet werden, dass das erste Flugzeugbauteil (1) und das zweite Flugzeugbauteil (3) zumindest abschnittsweise flächig aneinander anliegen.

8. Verwendung eines Systems (21) zur Ausführung eines Verfahrens nach einem der vorgehenden Ansprüche, wobei das System (21) ein oberes Klemmelement (23), ein unteres Klemmelemente (25) und das Dornelement (27) umfasst,
wobei das System (21) dazu eingerichtet ist, dass Dornelement (27) zu erwärmen,
wobei das obere Klemmelement (23) eine Anlagefläche (29) zur Anlage an der freien Oberfläche (5) des ersten Flugzeugbauteils (1) aufweist und das untere Klemmelement (25) eine Anlagefläche (35) zur Anlage an der freien Oberfläche (9) des zweiten Flugzeugbauteils (3) aufweist, und
wobei das obere Klemmelement (23) eine Führung (31) aufweist, in der das Dornelement (27) geführt wird, wenn mit dem Dornelement (27) die erste und die zweite Bohrung (17, 19) aufgeweitet werden.

9. Verwendung nach Anspruch 8, wobei das obere Klemmelemente (23) Heizelemente (41) umfasst, mit denen das erste Bauelement (1) erwärmt werden kann, und/oder wobei das untere Klemmelement (25) Heizelemente (41) umfasst, mit denen das zweite Bauelement (3) erwärmt werden kann.

10. Verwendung nach Anspruch 8 oder 9, wobei das Dornelement (27) entlang einer Längsachse (33) einen ersten Abschnitt (43), einen zweiten Abschnitt (45) und einen dritten Abschnitt (47) aufweist, wobei das Dornelement (27) im ersten Abschnitt (43) eine Kegelspitze bildet, die zum Aufweiten der ersten und der zweiten Bohrung (17, 19) ausgebildet ist, der zweite Abschnitt (45) sich an den ersten Abschnitt (43) anschließt, das Dornelement (27) im zweiten Abschnitt (45) zylinderförmig ausgebildet ist, der dritte Abschnitt (47) sich an den zweiten Abschnitt (45) anschließt und das Dornelement (27) im dritten Abschnitt (47) einen Kegelstumpf bildet, wobei ein Durchmesser des von dem Dornelement (27) gebildeten Kegelstumpfes entlang der Längsachse (33) vom zweiten Abschnitt (45) weg zunimmt und der dritte Abschnitt (47) zum Ausbilden der Vertiefung (55) zur Aufnahme des Nietkopfes (61) des Niets (59) ausgebildet ist.

11. Verwendung (21) nach einem der Ansprüche 8, 9 oder 10, wobei das untere Klemmelement (25) ein Schulterelement (39) aufweist, um an der freien Oberfläche (9) des zweiten Flugzeugbauteils (3), an der das Dornelement (27) aus der zweiten Bohrung (19) austritt, von dem Dornelement (27) verdrängtes thermoplastisches Material (51) derart thermoplastisch umzuformen, dass eine Anlagefläche (57) für den Schließkopf (63) des Niets (59) gebildet wird.

## Claims

1. A method of joining two aircraft components (1, 3) of a thermoplastic composite material by means of a rivet (59), the method comprising the following steps:
Providing a first aircraft component (1) made of a thermoplastic composite material and a second aircraft component (3) made of a thermoplastic composite material,
arranging the first aircraft component (1) and the second aircraft component (3) with respect to each other in such a way that the first aircraft component (1) at least partially lies flat against the second aircraft component (3),
expanding a first bore (17) in the first aircraft component (1) and a second bore (19) in the second aircraft component (3) with a mandrel element (2. 7) so that the first bore (17) and the second bore (19) form the continuous bore (49) through the first and the second aircraft component (1, 3) for receiving the rivet (59) after expansion, wherein the first aircraft component (1) and the second aircraft component (3) are locally heated during expansion so that the first aircraft component (i) is thermoplastically formed during expansion of the first bore (17) and the second aircraft component (3) is thermoplastically formed during expansion of the second bore (19), wherein the mandrel member (27) is inserted through the first bore (17) into the second bore (19), and inserting the rivet (59) into the through bore (49) such that the rivet (59) extends through the first bore (17) in the first aircraft component (1) and the second bore (19) in the second aircraft component (3).

2. The method according to claim 1, wherein the first bore (17) is introduced into the first aircraft component (1) before the first and the second aircraft component (1, 3) are arranged in such a way that the first aircraft component (1) and the second aircraft component (3) at least partially lie flat against each other, wherein the first bore (17) is preferably introduced into the first aircraft component (1) with a cutting drilling tool.

3. Method according to claim 1 or 2, wherein the second bore (19) is introduced into the second aircraft component (3) before the first and the second aircraft component (1, 3) are arranged in such a way that the first aircraft component (1) and the second aircraft component (3) at least partially lie flat against one another, wherein the second bore (19) is preferably introduced into the second aircraft component (3) with a chip-removing drilling tool.

4. Method according to one of the preceding claims, wherein the first bore (17) is introduced into the first aircraft component (1) with a laser, and/or wherein the second bore (19) is introduced into the second aircraft component (3) with a laser.

5. Method according to one of the preceding claims, wherein a recess (55), which surrounds the first bore (17) in sections, for receiving a rivet head (61) of the rivet (59) is introduced into a free surface (5) of the first aircraft component (1) with the mandrel element (27), in which the first aircraft component (1) is thermoplastically formed, the mandrel element (27) being introduced into the first bore (17) from the free surface (1), the recess (55) for receiving the rivet head (61) preferably being conical.

6. Method according to any one of the preceding claims, wherein after expanding of the first and second bores (17, 19) with the mandrel element (27), a shoulder element (39) is used to be positioned on a free surface (9) of the second aircraft component (3) where the mandrel element (27) emerges from the second bore (19) after the mandrel element (27) has been passed through the first and second bores (17, 19), thermoplastically reshaping thermoplastic material displaced by the mandrel element (27) in such a way that an abutment surface (57) for a closing head (63) of the rivet (59) is formed, the abutment surface (57) preferably being flat and extending perpendicularly to a direction (33) in which the first and second bores (17, 19) extend.

7. Method according to one of the preceding claims, wherein the first aircraft component (1) and the second aircraft component (3) are welded to one another before the first bore (17) and the second bore (19) are widened with the mandrel element (27) and after the first and the second aircraft component (1, 3) are arranged in such a way that the first aircraft component (1) and the second aircraft component (3), at least in sections, lie flat against one another.

8. Use of a system (21) for carrying out a method according to any one of the preceding claims, the system (21) comprising an upper clamping element (23), a lower clamping element (25) and the mandrel element (27),
wherein the system (21) is adapted to heat the mandrel member (27),
wherein the upper clamping element (23) has an abutment surface (29) for abutment against the free surface (5) of the first aircraft component (1) and the lower clamping element (25) has an abutment surface (35) for abutment against the free surface (9) of the second aircraft component (3), and wherein the upper clamping element (23) has a guide (31) in which the mandrel element (27) is guided when the first and second bores (17, 19) are expanded with the mandrel element (27).

9. Use according to claim 8, wherein the upper clamping element (23) comprises heating elements (41) with which the first component (1) can be heated, and/or wherein the lower clamping element (25) comprises heating elements (41) with which the second component (3) can be heated.

10. Use according to claim 8 or 9, wherein the mandrel element (27) has a first section (43), a second section (45) and a third section (47) along a longitudinal axis (33), wherein the mandrel element (27) in the first section (43) forms a conical tip which is designed to expand the first and second bores (17, 19), the second section (45) adjoins the first section (43), the mandrel element (27) in the second section (45) is cylindrical in shape, the third portion (4'7) is contiguous with the second portion (45) and the mandrel member (27) forms a frustum in the third portion (47), wherein a diameter of the frustum formed by the mandrel member (27) increases along the longitudinal axis (33) away from the second portion (45) and the third portion (47) is configured to form the recess (55) for receiving the rivet head (61) of the rivet (59).

11. The use (21) of any one of claims 8, 9 or 10, wherein the lower clamping member (25) comprises a shoulder member (39) for thermoplastically reforming thermoplastic material (51) displaced from the mandrel member (27) at the free surface (9) of the second aircraft component (3) where the mandrel member (27) exits the second bore (19), such that an abutment surface (57) for the closing head (63) of the rivet (59) is formed.

## Revendications

1. Procédé d'assemblage de deux éléments d'aéronef (1, 3) en matériau composite thermoplastique au moyen d'un rivet (59), le procédé comprenant les étapes suivantes :
Fournir un premier composant d'avion (1) en matériau composite thermoplastique et un second composant d'avion (3) en matériau composite thermoplastique,
l'agencement du premier élément d'aéronef (1) et du deuxième élément d'aéronef (3) l'un par rapport à l'autre de telle sorte que le premier élément d'aéronef (1) s'appuie au moins en partie à plat sur le deuxième élément d'aéronef (3),
l'expansion d'un premier alésage (17) dans le premier élément d'aéronef (1) et d'un deuxième alésage (19) dans le deuxième élément d'aéronef (3) avec un élément de mandrin (2. 7) de sorte que le premier alésage (17) et le deuxième alésage (19), après expansion, forment l'alésage continu (49) à travers les premier et deuxième composants d'aéronef (1, 3) pour recevoir le rivet (59), dans lequel le premier composant d'aéronef (1) et le deuxième composant d'aéronef (3) sont chauffés localement pendant l'expansion de sorte que le premier composant d'aéronef (i) est formé de manière thermoplastique pendant l'expansion du premier alésage (17) et le deuxième composant d'aéronef (3) est formé de manière thermoplastique pendant l'expansion du deuxième alésage (19), dans lequel l'élément de mandrin (27) est inséré à travers le premier alésage (17) dans le second alésage (19), et l'insertion du rivet (59) dans l'alésage traversant (49) de telle sorte que le rivet (59) s'étend à travers le premier alésage (17) dans le premier composant d'aéronef (1) et le second alésage (19) dans le second composant d'aéronef (3).

2. Procédé selon la revendication 1, dans lequel le premier alésage (17) est introduit dans le premier élément d'aéronef (1) avant que le premier et le deuxième élément d'aéronef (1, 3) soient disposés de telle sorte que le premier élément d'aéronef (1) et le deuxième élément d'aéronef (3) soient au moins partiellement en contact de surface l'un avec l'autre, dans lequel le premier alésage (17) est de préférence introduit dans le premier élément d'aéronef (1) au moyen d'un outil de perçage par enlèvement de copeaux.

3. Procédé selon la revendication 1 ou 2, dans lequel le deuxième alésage (19) est introduit dans le deuxième élément d'aéronef (3) avant que le premier et le deuxième élément d'aéronef (1, 3) soient disposés de telle sorte que le premier élément d'aéronef (1) et le deuxième élément d'aéronef (3) s'appliquent l'un contre l'autre au moins par sections, le deuxième alésage (19) étant de préférence introduit dans le deuxième élément d'aéronef (3) avec un outil de perçage par enlèvement de copeaux.

4. Procédé selon l'une des revendications précédentes, dans lequel le premier alésage (17) est introduit dans le premier élément d'aéronef (1) avec un laser, et/ou dans lequel le deuxième alésage (19) est introduit dans le deuxième élément d'aéronef (3) avec un laser.

5. Procédé selon l'une quelconque des revendications précédentes, dans lequel un évidement (55), qui entoure le premier alésage (17) par sections, pour recevoir une tête de rivet (61) du rivet (59) est introduit dans une surface libre (5) du premier composant d'aéronef (1) au moyen de l'élément de mandrin (27), dans lequel le premier composant d'avion (1) est formé de manière thermoplastique, dans lequel l'élément de mandrin (27) est introduit dans le premier alésage (17) à partir de la surface libre (1), la dépression (55) destinée à recevoir la tête de rivet (61) étant de préférence conique.

6. Une méthode selon l'une quelconque des revendications précédentes, dans laquelle, après avoir développé
des premier et deuxième alésages (17, 19) avec l'élément de mandrin (27), un élément d'épaulement (39) est utilisé pour être placé sur une surface libre (9) du deuxième composant d'aéronef (3) sur laquelle l'élément de mandrin (27) émerge du deuxième alésage (19) après que l'élément de mandrin (27) a été passé à travers les premier et deuxième alésages (17, 19), de façon à former une surface de butée (57) pour une tête de fermeture (63) du rivet (59), la surface de butée (57) étant de préférence plane et s'étendant perpendiculairement à une direction (33) dans laquelle s'étendent les premier et deuxième perçages (17, 19).

7. Procédé selon l'une des revendications précédentes, dans lequel le premier élément d'aéronef (1) et le deuxième élément d'aéronef (3) sont soudés l'un à l'autre avant que le premier alésage (17) et le deuxième alésage (19) soient élargis avec l'élément de mandrin (27) et après que le premier et le deuxième élément d'aéronef (1, 3) soient disposés de telle sorte que le premier élément d'aéronef (1) et le deuxième élément d'aéronef (3) soient au moins par sections à plat l'un contre l'autre.

8. Utilisation d'un système (21) pour la mise en oeuvre d'une méthode selon l'une quelconque des revendications précédentes, le système (21) comprenant un élément de serrage supérieur (23), un élément de serrage inférieur (25) et l'élément de mandrin (27),
dans lequel le système (21) est adapté pour chauffer l'élément de mandrin (27),
dans lequel l'élément de serrage supérieur (23) présente une surface de butée (29) pour la mise en appui contre la surface libre (5) du premier composant d'avion (1) et l'élément de serrage inférieur (25) présente une surface de butée (35) pour la mise en appui contre la surface libre (9) du deuxième composant d'avion (3), et dans lequel l'élément de serrage supérieur (23) présente un guidage (31) dans lequel l'élément de mandrin (27) est guidé lorsque le premier et le deuxième alésage (17, 19) sont élargis avec l'élément de mandrin (27).

9. Utilisation selon la revendication 8, dans laquelle l'élément de serrage supérieur (23) comprend des éléments chauffants (41) avec lesquels le premier composant (1) peut être chauffé, et/ou dans laquelle l'élément de serrage inférieur (25) comprend des éléments chauffants (41) avec lesquels le second composant (3) peut être chauffé.

10. Utilisation selon la revendication 8 ou 9, dans laquelle l'élément de mandrin (27) présente le long d'un axe longitudinal (33) une première section (43), une deuxième section (45) et une troisième section (47), dans laquelle l'élément de mandrin (27) dans la première section (43) forme une pointe conique qui est conçue pour élargir le premier et le deuxième alésage (17, 19), la deuxième section (45) se raccorde à la première section (43), l'élément de mandrin (27) dans la deuxième section (45) est de forme cylindrique, la troisième partie (47) est contiguë à la deuxième partie (45) et l'élément de mandrin (27) forme un tronc de cône dans la troisième partie (47), dans lequel un diamètre du tronc de cône formé par l'élément de mandrin (27) augmente le long de l'axe longitudinal (33) en s'éloignant de la deuxième partie (45) et la troisième partie (47) est formée pour former l'évidement (55) destiné à recevoir la tête de rivet (61) du rivet (59).

11. Utilisation (21) selon l'une des revendications 8, 9 ou 10, dans laquelle l'élément de serrage inférieur (25) comprend un élément d'épaulement (39) pour le façonnage thermoplastique de la matière thermoplastique (51) déplacée par l'élément de mandrin (27) sur la surface libre (9) du deuxième composant d'avion (3) sur laquelle l'élément de mandrin (27) sort du deuxième alésage (19), de telle sorte qu'une surface de butée (57) pour la tête de fermeture (63) du rivet (59) est formée.
